(19) Europäisches Patentamt
European Patent Office
Office européen des brevets

(11) Veröffentlichungsnummer: **0 127 131**
**A2**

(12) # EUROPÄISCHE PATENTANMELDUNG

(21) Anmeldenummer: **84105905.8**

(22) Anmeldetag: **24.05.84**

(51) Int. Cl.³: **C 07 C 91/26**
**A 01 N 33/12**

(30) Priorität: **28.05.83 DE 3319509**

(43) Veröffentlichungstag der Anmeldung:
**05.12.84 Patentblatt 84/49**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Hofinger, Manfred, Dr.**
**Kanalstrasse 3**
**D-8269 Burgkirchen(DE)**

(72) Erfinder: **May, Adolf, Dr.**
**Dahlienweg 5**
**D-6238 Hofheim am Taunus(DE)**

(72) Erfinder: **Bücking, Hans-Walter, Dr.**
**In den Padenwiesen 30**
**D-6233 Kelkheim (Taunus)(DE)**

(72) Erfinder: **Wallhäusser, Karl-Heinz, Prof.Dr.**
**Lessingstrasse 20**
**D-6238 Hofheim am Taunus(DE)**

(54) **Neue quaternäre Ammoniumverbindungen, Verfahren zu deren Herstellung und deren Verwendung als Desinfektionsmittel.**

(57) Es werden quarternäre Ammoniumverbindungen der allgemeinen Formel

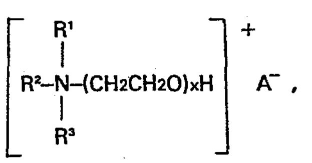

(I)

worin $R^1$ und $R^2$, gleich oder verschieden, einen Alkylrest mit 8 bis 12 C-Atomen; $R^3$ einen Alkylrest mit 1 bis 4 C-Atomen, sowie $A^-$ ein Anion einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure darstellen; ferner x einer ganze oder gebrochene Zahl im Bereich von 1 bis 2 ist, und ein Verfahren zu deren Herstellung beschrieden.

Die Verbindungen eignen sich als Desinfektionsmittel, insbesondere für solche Bäder, die mit metallischen Gegenständen in Kontakt kommen.

EP 0 127 131 A2

Croydon Printing Company Ltd.

0127131

HOECHST AKTIENGESELLSCHAFT HOE 83/F 904 Dr.SC-ba

# Neue quaternäre Ammoniumverbindungen, Verfahren zu deren Herstellung und deren Verwendung als Desinfektionsmittel

Aus der US-PS 3 836 669 sind quaternäre Ammoniumverbindungen bekannt, die zwei längerkettige Alkylreste und zwei kurzkettige Alkylreste (oder einen kurzkettigen Alkyl- und einen Benzylrest) am quaternären Stickstoffatom tragen. Als Anionen sind in diesen Verbindungen Chlorid, Metho- oder Ethosulfat enthalten. Diese quaternären Ammoniumverbindungen sollen gut geeignet sein zur Desinfektion harter Oberflächen. Die Anwesenheit von zwei längerkettigen Alkylresten ist dabei von Bedeutung für die Erzielung einer hohen bakteriziden Wirkung. Andererseits bringt die Vermehrung der langkettigen Reste im Molekül eine verschlechterte Solubilisierung in Wasser mit sich. Außerdem sind die genannten Ammoniumverbindungen nicht geeignet, Metallgegenstände zu desinfizieren, da sie auch in höherer Verdünnung hochgradig korrodierend auf Metalle wirken. Es besteht daher ein Bedürfnis nach Desinfektionsmitteln, die diese Nachteile nicht aufweisen.

Gemäß der vorliegenden Erfindung wird dem Rechnung getragen durch quaternäre Ammoniumverbindungen der allgemeinen Formel

$$\left[\begin{array}{c} R^1 \\ | \\ R^2-N-(CH_2CH_2O)_xH \\ | \\ R^3 \end{array}\right]^+ A^- \quad , \qquad (I)$$

worin $R^1$ und $R^2$, gleich oder verschieden, einen Alkylrest mit 8 bis 12 C-Atomen; $R^3$ einen Alkylrest mit 1 bis 4 C-Atomen; sowie $A^-$ ein Anion einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure darstellen; ferner x (als statistischer Mittelwert) eine ganze oder gebrochene Zahl im Bereich von 1 bis 2 ist. Vorzugsweise ist $R^1$ und $R^2$, gleich oder verschieden, ein Alkylrest mit 8 bis 12 C-Atomen, insbesondere ein solcher mit gerader Kette, $R^3$ ein Methyl- oder ein Ethylrest, x eine ganze oder gebrochene Zahl im Bereich von 1 bis 1,5, und $A^-$ das Anion der Essigsäure oder der Propionsäure.

Die erfindungsgemäßen Ammoniumverbindungen werden hergestellt, ausgehend von tertiären Aminen der Formel

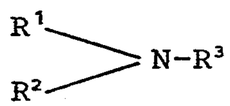 .

Diese wiederum sind in bekannter Weise erhältlich durch Umsetzung von sekundären Aminen der Formel

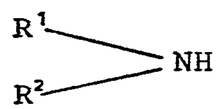

mit Aldehyden und Ameisensäure oder durch Umsetzung der vorgenannten sekundären Amine mit Aldehyden in Gegenwart von Wasserstoff und Edelmetall- oder Nickel-Katalysatoren.

Das genannte tertiäre Amin wird nun mit der Carbonsäure aus der obengenannten Gruppe und mit Ethylenoxid umgesetzt. Dabei können diese beiden Reaktionspartner gleichzeitig zugegeben und zur Umsetzung gebracht werden. Bevorzugt ist es jedoch, erst die Umsetzung mit der jeweiligen Carbonsäure vorzunehmen, was während des Aufheizens

auf die Reaktionstemperatur geschehen kann, und danach Ethylenoxid zuzusetzen. Die Carbonsäure wird in äquimolarer Menge oder in geringem Überschuß bis zu 1,1 mol pro mol Amin eingesetzt, die Menge des Ethylenoxids beträgt 1,5 bis 3 mol, vorzugsweise 2,5 bis 3 mol pro mol Amin. Die Reaktion wird in wäßrigem Medium durchgeführt, dem gegebenenfalls ein polares organisches Lösungsmittel, zum Beispiel ein Alkanol mit niedriger C-Zahl, zugesetzt werden kann. Die Reaktion wird in einem geschlossenen Reaktionsgefäß bei einer Temperatur von 80 bis 90 °C und bei leichtem Überdruck von bis zu 3 bar vorgenommen. Die Reaktionszeit beträgt im allgemeinen 2 bis 6 Stunden. Gegebenenfalls wird nach beendeter Quaternisierung das kochkonzentrierte Reaktionsprodukt mit Wasser, beispielsweise auf eine 50 %ige Lösung, verdünnt.
Die so erhaltenen quaternären Ammoniumverbindungen der Formel I besitzen eine überraschende Kombination von vorteilhaften Eigenschaften. Sie weisen eine hochgradige Solubilisierung in Wasser auf und können bei ihrer Herstellung in einem Arbeitsgang als hochkonzentrierte Einstellungen in wäßriger Phase gewonnen werden, die dennoch ausreichend bewegliche und gut handhabbare Flüssigkeiten darstellen. Diese flüssigen Einstellungen können bis zu 85 Gew.-% Wirkstoff enthalten, ohne daß organische Lösungsmittel, wie beispielsweise Isopropanol, zugegeben werden müssen. Damit entfallen alle Gefahren, die sich aus der Entzündlichkeit solcher zugesetzter organischer Lösungsmittel ergeben, insbesondere auf dem Transport. Andererseits sind diese hochkonzentrierten Einstellungen für den späteren Gebrauch ohne Schwierigkeiten in Wasser verdünnbar.

Ferner sind die erfindungsgemäßen Verbindungen der Formel I nicht allzu hydrophil und daher von ausgezeichneter bakterizider Wirksamkeit. Ähnliche Verbindungen, in denen die Hydrophilie zu stark ausgeprägt ist (beispielsweise solche mit mehreren und/oder sehr langen Ethylenoxid-Ketten) besitzen mangels ausreichender Substantivität eine beträchtlich verminderte bakterizide Wirksamkeit.

Zu dieser günstigen Balance zwischen guter Wasserlöslichkeit und hervorragenden bakteriziden Eigenschaften kommt noch hinzu, daß die erfindungsgemäßen Verbindungen keinerlei Korrosionserscheinungen auf Metallen hervorrufen, während ähnliche quaternäre Ammoniumverbindungen starke Korrosion bewirken (dies wird in den unten stehenden Vergleichsversuchen gezeigt). Daher sind die erfindungsgemäßen Verbindungen der Formel I geeignet als ausgezeichnete Desinfektionsmittel im weitesten Sinne, insbesondere im Sanitärbereich und besonders dort, wo sie mit ärztlichen oder zahnärztlichen Instrumenten in Berührung kommen oder in Bädern und sanitären Anlagen mit Metallarmaturen.

Die Erfindung wird durch folgende Beispiele erläutert:

Beispiel 1

In einem 1-l-Rührautoklaven werden 213,5 g (0,7 mol) Didecylmethylamin, 52,4 g (0,7 mol) Propionsäure und 63 g (3,5 mol) Wasser vorgelegt. Nach Erreichen einer Reaktionstemperatur von 80 °C werden 92,5 g (2,1 mol) Ethylenoxid so zugegeben, daß ein Druck von maximal 3 bar erreicht und eine Temperatur von 95 °C nicht überschritten wird. Die anschließende Nachreaktionszeit beträgt 3 bis 4 Stunden bei ca. 80 °C, wobei der Druck auf 0,2 bar absinkt.
Die Analyse dieses Produktes weist einen effektiven Quaternisierungsgrad von 94 % auf.

Der Quaternisierungsgrad wird als Verhältnis aus der Zweiphasen-Titration der quaternären Ammoniumverbindung bei pH 1 bis 2 bzw. pH 10 mit Natrium-Dodecylsulfat ermittelt.

Beispiel 2

Zur Herstellung von Didecyl-methyl-oxethyl-ammoniumacetat werden 336 g (1,1 mol) Didecylmethylamin, 66 g (1,1 mol) Essigsäure in 99 g (5,5 mol) Wasser, wie in Beispiel 1 beschrieben, mit 145 g (3,3 mol) Ethylenoxid umgesetzt. Der Quaternisierungsgrad des Produktes beträgt 96 %.

Beispiel 3

Zur Herstellung von Didecyl-methyl-oxethyl-ammoniumlactat werden 159 g (0,5 mol) Didecylmethylamin, 62,5 g (0,5 mol) 70 gew.-%ige Milchsäure in 27 g (1,5 mol) Wasser, wie in Beispiel 1 beschrieben, mit 66 g (1,5 mol) Ethylenoxid umgesetzt. Der Quaternisierungsgrad des Produktes beträgt 99 %.

Zur Prüfung der Korrosivität werden folgende Versuche durchgeführt:
Von den in Tabelle I genannten Verbindungen werden 1 gew.-%ige Lösungen hergestellt, in die die vorher mit Scheuerpulver und Aceton gereinigten, auf der Analysenwaage gewogenen Stahlcoupons (Normstahl ST 1203) vollkommen eingetaucht werden. Die Coupons werden zunächst nach 15 Minuten und nach 1 1/2 Stunden visuell geprüft. Während an den Vergleichsproben A, B und C nach 15 Minuten erste Rostansätze bereits deutlich sichtbar sind und nach 1 1/2 Stunden bereits die Lösung verfärbt ist, bleiben die Lösungen im Falle der erfindungsgemäßen Verbindungen der Beispiele 1 und 2 völlig klar

und an den Coupons ist keine Veränderung zu bemerken. Nach 4 Wochen wird der Gewichtsverlust der Stahlcoupons bestimmt; das Ergebnis zeigt die folgende Tabelle I (Beispiele 1 und 2 erfindungsgemäße Verbindungen; Beispiele A bis C Vergleichsverbindungen).

Die mikrobiozide Wirkung der erfindungsgemäßen Verbindungen zeigt Tabelle II (µg Wirkstoff/ml Wasser; Kontaktzeit 24 und 48 h; Raumtemperatur). Die angegebenen Zahlen bedeuten die minimalen Hemmkonzentrationen, um die vorgelegte Keimzahl von $10^6$ Keimen pro ml abzutöten.

TABELLE I

| Beispiel | Aussehen der Coupons | Aussehen der Lösung | Bezeichnung | Gewichtsverlust (%) | Gewichtsverlust (mg) |
|---|---|---|---|---|---|
| 1 | keine Korrosion | klar | Didecyl-methyl-oxethyl-ammoniumpropionat | - | 0,2 |
| 2 | keine Korrosion | klar | Didecyl-methyl-oxethyl-ammoniumacetat | - | 1,1 |
| A | vollkommen schwarz | 2 mm dicke, schwarze Bodenschicht | Didecyl-dimethyl-ammoniumchlorid | 0,80 | 39,9 |
| B | vollkommen verrostet | 2 mm dicke Rost-schicht am Boden | Lauryl-trimethyl-ammoniummethosulfat | 0,56 | 28,7 |
| C | schwarze Flecken und Rostansätze, besonders an den Kanten | gelb-orange, trüb | Didecyl-methyl-oxethyl-ammoniumphosphat | 0,18 | 8,8 |

TABELLE II

| Mikroorganismen | Beispiel 1 Didecyl-methyl-oxethyl-ammoniumpropionat | | Vergleichssubstanzen: Didecyl-dimethyl-ammoniumchlorid | | Vergleichssubstanzen: Lauryl-dimethyl-benzyl-ammoniumchlorid | |
|---|---|---|---|---|---|---|
| | 24 h | 48 h | 24 h | 48 h | 24 h | 48 h |
| Escherichia coli | 15,6 | 15,6 | 15,6 | 15,6 | 31,2 | 15,6 |
| Pseudomonas aeruginosa | 15,6 | 15,6 | 15,6 | 7,8 | 62,5 | 15,6 |
| Proteus mirabilis | 31,2 | 15,6 | 62,5 | 62,5 | 62,5 | 31,2 |
| Candida albicans | 7,8 | <3,9 | <3,9 | <3,9 | 7,8 | 7,8 |
| Penicilium notatum | 7,8 | 7,8 | <3,9 | <3,9 | 7,8 | 7,8 |
| Staphylococcus aureus | 15,6 | 7,8 | 62,5 | 15,6 | 31,2 | 31,2 |
| algizide Wirkung nach 14 Tagen | 7,8 | | 7,8 | | 15,6 | |

Patentansprüche

1. Quaternäre Ammoniumverbindungen der allgemeinen Formel

$$\left[ R^2-\overset{\displaystyle R^1}{\underset{\displaystyle R^3}{N}}-(CH_2CH_2O)_xH \right]^+ A^- , \qquad (I)$$

worin $R^1$ und $R^2$, gleich oder verschieden, einen Alkylrest mit 8 bis 12 C-Atomen; $R^3$ einen Alkylrest mit 1 bis 4 C-Atomen, sowie $A^-$ ein Anion einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure darstellen; ferner x eine ganze oder gebrochene Zahl im Bereich von 1 bis 2 ist.

2. Verfahren zur Herstellung von quaternären Ammoniumverbindungen der Formel I nach Anspruch 1, dadurch gekennzeichnet, daß ein tertiäres Amin der Formel 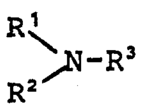, in der $R^1$, $R^2$ und $R^3$ die in Anspruch 1 angegebene Bedeutung haben, mit 1 bis 1,1 mol pro mol Amin einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure und mit 1,5 bis 3 mol Ethylenoxid pro mol Amin bei Temperaturen von 80 bis 90 °C in wäßriger Phase, gegebenenfalls unter Zusatz eines polaren organischen Lösungsmittels, umgesetzt wird.

3. Verwendung der quaternären Ammoniumverbindungen der Formel I gemäß Anspruch 1 als Desinfektionsmittel, insbesondere in Lösungen, die mit metallischen Gegenständen in Berührung kommen.

Patentansprüche für Benennungsland AT

1. Verfahren zur Herstellung von quaternären Ammoniumverbindungen der allgemeinen Formel

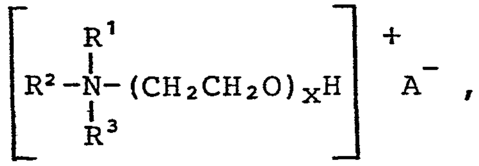

worin $R^1$ und $R^2$, gleich oder verschieden, einen Alkylrest mit 8 bis 12 C-Atomen; $R^3$ einen Alkylrest mit 1 bis 4 C-Atomen, sowie $A^-$ ein Anion einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure darstellen; ferner x eine ganze oder gebrochene Zahl im Bereich von 1 bis 2 ist, dadurch gekennzeichnet, daß ein tertiären Amin der Formel

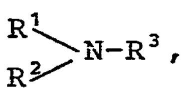, in der $R^1$, $R^2$ und $R^3$ die oben angegebene Bedeutung haben, mit 1 bis 1,1 mol pro mol Amin einer Carbonsäure aus der Gruppe Essigsäure, Propionsäure, Glykolsäure, Milchsäure, Tartronsäure, Äpfelsäure, Weinsäure, Zitronensäure, Maleinsäure und Fumarsäure und mit 1,5 bis 3 mol Ethylenoxid pro mol Amin bei Temperaturen von 80 bis 90 °C in wäßriger Phase, gegebenenfalls unter Zusatz eines polaren organischen Lösungsmittels, umgesetzt wird.

2. Verwendung der gemäß Anspruch 1 hergestellten quaternären Ammoniumverbindungen als Desinfektionsmittel, insbesondere in Lösungen, die mit metallischen Gegenständen in Berührung kommen.